Europäisches Patentamt

European Patent Office

Office européen des brevets

(19)

(11) Veröffentlichungsnummer: **0 144 707**
**B1**

# (12) EUROPÄISCHE PATENTSCHRIFT

(45) Veröffentlichungstag der Patentschrift:
18.03.87

(51) Int. Cl.⁴: **B 27 B 9/04**

(21) Anmeldenummer: 84113042.0

(22) Anmeldetag: 30.10.84

(54) Führungseinrichtung für eine transportable Säge.

(30) Priorität: 12.11.83 DE 3341003

(43) Veröffentlichungstag der Anmeldung:
19.06.85 Patentblatt 85/25

(45) Bekanntmachung des Hinweises auf die Patenterteilung:
18.03.87 Patentblatt 87/12

(84) Benannte Vertragsstaaten:
AT CH DE FR GB IT LI SE

(56) Entgegenhaltungen:
GB-A-783 112
US-A-2 630 147
US-A-4 125 942

(73) Patentinhaber: FESTO- Maschinenfabrik Gottlieb
Stoll, Ulmer Strasse 48, D-7300 Esslingen (DE)

(72) Erfinder: Maier, Peter, Dipl.- Ing. (FH),
Gerokstrasse 1, D-7311 Neidlingen (DE)
Erfinder: Hänsel, Gernot, Dipl.- Ing. (FH),
Gerstenstrasse 31, D-7000 Stuttgart 70 (DE)

(74) Vertreter: Magenbauer, Rudolf, Dipl.- Ing.,
Patentanwälte Dipl.- Ing. Rudolf Magenbauer
Dipl.- Phys. Dr. Otto Reimold Hölderlinweg 58,
D-7300 Esslingen (DE)

## Beschreibung

Die Erfindung betrifft eine Führungseinrichtung für eine transportable Säge, die aus einem auf ein Werkstück auflegbaren Führungsplatte und einer an der Säge befestigten Tragplatte besteht. Die Führungsplatte besitzt eine sich in Vorschubrichtung der Säge erstreckende, erhabene Schiene. Die Säge wird mit der Tragplatte auf die Führungsplatte aufgesetzt, wobei die Tragplatte die Schiene übergreift. Die Tragplatte läßt sich an der Schiene entlang auf der Führungsplatte verschieben, wobei sie sich mit beidseits der Schiene zu liegen kommenden Führungsabschnitten gegen die Schiene abstützt. Hierdurch wird eine Längsführung der Säge parallel zu der Schiene der Führungsplatte hergestellt, und es können mit hoher Genauigkeit gerade Sägeschnitte gelegt werden, ohne daß die Gefahr besteht, daß die Säge aus dem Schnitt läuft.

Führungseinrichtungen der genannten Art können als Schiene beispielsweise ein Profilstück aufweisen, und an der Tragplatte kann ein entsprechendes Gegenprofil ausgeformt sein, vermittels dessen sich die Tragplatte formschlüssig auf die Schiene aufsetzen läßt. Das Profil der Schiene kann insbesondere im wesentlichen rechteckig sein, was z.B. eine Fertigung als Vierkantrohr o.ä. Strangpressteil ermöglicht. Die Tragplatte ist in diesem Fall mit einer komplementären Rechteckausnehmung versehen, die über die Schiene passt. Beispielsweise können an die Tragplatte zwei Gleitböcke angeformt sein, die mit einer als Formnegativ der Schiene gestalteten Ausnehmung klauenartig auf die Schiene aufsetzbar sind. Weiterhin kann der Tragplatte eine Führungseinrichtung in Gestalt einer Sicke aufgeprägt sein, und in einer besonders einfachen Bauform besteht die Führungseinrichtung an der Tragplatte aus einem Schlitz, dessen hochgebogene Ränder an der Schiene zur Anlage kommen.

Bei der Herstellung der Schiene und des darauf passenden Läuferabschnitts der Tragplatte treten unvermeidliche Fertigungstoleranzen auf. Um insofern einen Ausgleich zu schaffen, läuft in bekannten Anordnungen die Tragplatte mit relativ großem Spiel auf der Schiene. Bei einem Strangprofil als Schiene liegen die Fertigungstoleranzen typischerweise bei ± 0,15 mm, und eine als Biegeteil hergestellte Tragplatte ist eher noch maßungenauer, so daß im Ergebnis ein Führungsspiel bis zu 0,4 mm auftritt. Dieses beeinträchtigt aber in nachteiliger Weise die Präzision des Sägeschnitts. Es ist natürlich grundsätzlich möglich, unter Anwendung spanabhebender Bearbeitungstechniken Führungseinrichtungen mit einer höheren Führungsgenauigkeit zu erstellen, doch ist der damit verbundene Aufwand hoch und aus Kostengesichtspunkten nicht zu rechtfertigen.

Aufgabe der Erfindung ist es, eine Führungseinrichtung für eine transportable Säge anzugeben, die bei einer unaufwendigen und kostengünstigen Bauweise eine erheblich verbesserte Führungsgenauigkeit aufweist.

Die Aufgabe wird gemäß Anspruch 1 in einer Führungseinrichtung der eingangs genannten Art durch eine Zustellvorrichtung gelöst, die zwischen Tragplatte und Führungsplatte wirkt und das Laufspiel zwischen der Schiene und den zugehörigen Führungsabschnitten an der Tragplatte bestimmt.

Diese erfindungsgemäße Bauform ermöglicht es, sowohl für die Führungsplatte, als auch für die Tragplatte Fertigungstechniken zu verwenden, die mit gewissen Ungenauigkeiten behaftet sind, und auf eine aufwendige Nachbearbeitung der Teile zu verzichten. Insbesondere kann als Schiene ein Rohrmaterial oder ein Strangpressteil Verwendung finden, und die komplementäre Führungsstruktur an der Tragplatte kann durch Prägen, Biegen oder Stanzen hergestellt werden. Ein gewisses fertigungsbedingtes Spiel zwischen Führungsplatte und Tragplatte wird in Kauf genommen und man ordnet entweder an der Führungsplatte, oder an der Tragplatte eine Zustellvorrichtung an, die es gestattet, das Spiel im nachhinein zu verstellen und an das jeweilige Fertigungsergebnis anzupassen. Eine solche Zustellvorrichtung ist im Ergebnis unaufwendiger als eine Präzisionsfertigung von Führungsplatte und Tragplatte. Sie bietet den weiteren Vorteil, daß das Spiel zwischen Führungsplatte und Tragplatte den jeweiligen Bedürfnissen angepasst werden kann. Wird beispielweise eine vergleichsweise geringe Genauigkeit im Sägeschnitt verlangt, so kann das Führungsspiel vergrößert werden, mit der Folge, daß sich die Tragplatte leichter über die Führungsplatte schieben läßt. Für einen sehr genauen Sägeschnitt läßt sich andererseits das Führungsspiel verringern, wobei der Bewegung der Säge eine stärkere Reibung entgegenwirkt und größere Betätigungskräfte erforderlich sind. Die erfindungsgemäße Zustellvorrichtung ermöglicht es weiterhin, durch ein Nachregulieren der Führung evtl. Abnutzungs- und Verschleißerscheinungen auszugleichen, und schließlich kann die Zustellvorrichtung auch selbst nachstellend wirken.

Bevorzugte Weiterbildungen der Erfindung sind in nachgeordneten Ansprüchen gekennzeichnet.

Die Erfindung wird im folgenden anhand von vier in den Zeichnungen dargestellten Ausführungsbeispielen näher erläutert. Teilweise schematisch zeigen:

Fig. 1 einen Längsschnitt durch eine mit der erfindungsgemäßen Führungseinrichtung ausgerüstete Säge, wobei die Tragplatte von der Führungsplatte abgehoben und der Blick in Vorschubrichtung der Säge gerichtet ist;

Fig. 2 eine Draufsicht auf eine erste Bauform der Zustellvorrichtung;

Fig. 3 einen Schnitt durch die Zustellvorrichtung entlang der Linie III-III von Fig. 2;

Fig. 4 eine Draufsicht auf eine zweite Bauform der Zustellvorrichtung;

Fig. 5 einen Schnitt durch die Zustellvorrichtung entlang der Linie V-V von Fig. 4;

Fig. 6 eine Draufsicht auf eine dritte Bauform der Zustellvorrichtung;

Fig. 7 eine Draufsicht auf eine vierte Bauform der Zustellvorrichtung;

Fig. 8 einen Schnitt durch die Zustellvorrichtung entlang der Linie VIII-VIII von Fig. 7.

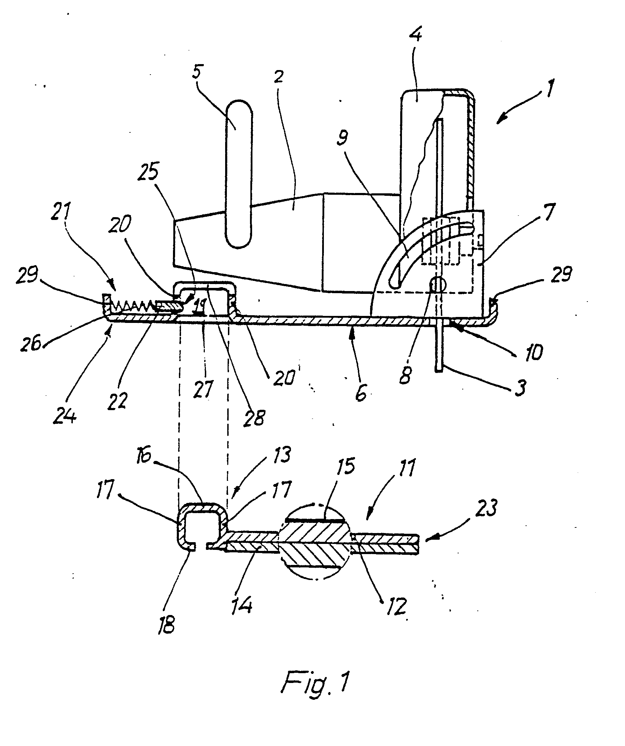

Bezugnehmend zunächst auf Fig. 1, ist exemplarisch eine Kreissäge 1 dargestellt, bei der die erfindungsgemäße Führungseinrichtung zur Anwendung kommt. Die Erfindung ist aber nicht auf Kreissägen beschränkt; die nachstehend näher beschriebene Führungseinrichtung kann vielmehr für transportable Sägen ganz allgemein zur Anwendung kommen. Die Kreissäge 1 besitzt ein Motorgehäuse 2, in dem ein nicht wiedergegebener elektrischer Antriebsmotor untergebracht ist. Die Antriebswelle das Motors trägt ein Sägeblatt 3, das mit dem größten Teil seines Umfanges in einer Abdeckhaube 4 aufgenommen ist. An das Motorgehäuse 2 ist ein Griff 5 angeformt, an dem die Kreissäge 1 von einer Bedienungsperson gehalten wird.

Mit der Kreissäge 1 ist eine Tragplatte 6 fest verbunden, die sich unterhalb des Motorgehäuses 2 befindet und einen Fuß der Kreissäge 1 bildet. Die Verbindung zwischen Kreissäge 1 und Tragplatte 6 wird in dem dargestellten Ausführungsbeispiel über ein Schwenksegment 7 hergestellt. Dieses besitzt eine Schwenkachse 8 und ein zentrisch bezüglich dieser Schwenkachse 8 verlaufendes, kreisbogenförmiges Langloch 9. Die Kreissäge 1 ist um die Schwenkachse 8 drehbar gelagert, und sie trägt einen durch das Langloch 9 hindurchragenden Bolzen, vermittels dessen sie sich in bestimmten Winkelstellungen arretieren läßt. Eine nicht näher dargestellte Skala erlaubt dabei ein Ablesen des Anstellwinkels. Das Sägeblatt 3 greift durch einen Schlitz 10 in der Tragplatte 6 hindurch, und es steht über die dem Motorgehäuse 2 abgewandte Unterseite der Tragplatte 6 hinaus. Dieser Überstand bestimmt mehr oder weniger die Schnittiefe der Kreissäge, wenn diese mit der Tragplatte 6 über ein zu zerteilendes Werkstück gefahren wird.

Zur Führung der Kreissäge 1 über das Werkstück dient eine Führungsplatte 11. Diese wird ihrerseits auf das Werkstück aufgelegt, auf dem sie gegen ein Verrutschen gesichert haftet. Die Führungsplatte 11 besitzt einen flachen Auflageabschnitt 12 und eine fest damit verbundene, erhabene Schiene 13. Sie steht an der Unterseite des Auflageabschnitte 12 mit dem Werkstück in Anlage, und die Oberseite des Auflageabschnitts 12 sowie die Schiene 13 bilden eine Gleitführung für die Tragplatte 6. An die Oberflächeneigenschaften des Auflageabschnitts 12 werden entsprechend auf seinen beiden Seiten unterschiedliche Anforderungen gestellt, denen am besten durch einen mehrschichtigen Aufbau Genüge getan wird.

Die Führungsplatte 11 ist in dem dargestellten Ausführungsbeispiel insgesamt als Profilteil aus Metall hergestellt. Der Auflageabschnitt 12 und die Schiene 13 sind somit einstückig aneinander angeformt. Ein solcher Aufbau ist herstellungstechnisch besonders einfach und kostengünstig, für die Erfindung aber nicht zwingend. Es ist ebenso möglich, den Auflageabschnitt 12 für sich allein, z.B. aus Blech, zu fertigen, und mit einer gesondert hergestellten Schiene zu verbinden, was z.B. durch Verschrauben, Vernieten oder Verschweißen geschehen kann (nicht dargestellt). Der Auflageabschnitt 12 der Führungsplatte 11 trägt an seiner dem Werkstück zugewandten Unterseite einen Belag 14, der aus einem Material mit hoher Reibung und guten Hafteigenschaften besteht. Vorzugsweise ist der Belag 14 aus einem elastisch zusammendrückbaren, weichen Gummi, oder aus einem Schaumstoffmaterial aufgebaut. Aus diesem Material wird eine Matte ausgeschnitten, die in ihrer Größe dem Auflagenabschnitt 12 entspricht, und diese Matte wird mit dem Auflageabschnitt 12 vorzugsweise verklebt. Durch einen solchen Belag 14 wird erreicht, daß die Führungsplatte 11 von selbst weitgehend unverrückbar auf einem zu zersägenden Werkstück haftet, auf das sie aufgelegt wird. Die der Tragplatte 6 zugewandte Oberseite der Führungsplatte 11 ist in einer dünnen Lage 15 mit einem glatten, harten Kunststoffmaterial niederer Reibung beschichtet, und dieselbe Beschichtung ist auch an der Schiene 13 vorgesehen. Hierdurch ist eine reibungsarme Gleitführung der Tragplatte 6 auf der Führungsplatte 11 gewährleistet.

Die Schiene 13 ist ein nach unten hin offenes Hohlprofil mit im wesentlichen rechteckigen Querschnitt. Die Kanten des Hohlprofils sind gerundet, und sein Profilrücken 16 steht über den Auflageabschnitt 12 nach oben hinaus. Die Schiene 13 befindet sich am seitlichen Rand des Auflageabschnitts 12. Dieser ist an einem der Profilschenkel 17 des Hohlprofils angeformt, und zwar im Abstand zu dem geschlitzten Profilboden 18, der dem Profilrücken 16 gegenüberliegt. Der Abstand ist etwas größer gewählt als die Decke des rutschfesten Belags 14 an der Unterseite des Auflageabschnitts 12. Die Führungsplatte 11 steht dadurch nur über den Belag 14 mit dem Werkstück in Berührung, und die Schiene 13 selbst kommt frei im Abstand von der Oberfläche des Werkstücks zu liegen.

Eine Führungsplatte 11 der beschriebenen Art kann beispielsweise als Strangpressteil aus Profilaluminium gefertigt werden. Der Querschnitt der Schiene 13 muß dabei nicht notwendigerweise rechteckig sein; beispielsweise ist auch eine Trapez-oder Schwalbenschwanzform denkbar. Man kann die

Führungsplatte 11 im übrigen auch aus Blech fertigen und eine Schiene 13 in Gestalt einer Erhöhung oder Sicke durch Prägen, Biegen o.ä. erstellen.

Die Kreissäge 1 wird mit der Tragplatte 6 auf die Führungsplatte 11 aufgesetzt, wobei die Tragplatte 6 die Schiene 13 übergreift. Die Tragplatte 6 weist eine Ausnehmung 19 auf, die als Formnegativ der Schiene 13 gestaltet ist. Vermittels dieser Ausnehmung 19 kommt die Tragplatte 6 in formschlüssige Anlage mit der Führungsplatte 11, so daß eine Schienenführung in Vorschubrichtung der Säge geschaffen wird. Die Tragplatte 6 kann wie die Führungsplatte 11 aus Profilmaterial bestehen; in dem dargestellten Ausführungsbeispiel ist aber die Tragplatte 6 mit der Grundplatte einer Kreissäge 1 identisch, und diese wird vorzugeweise aus Blech gefertigt. Die Ausnehmung 19 besteht aus einem langgestreckten, durch Ausstanzen erzeugten Schlitz, dessen Rand in Form zweier Lappen 20 senkrecht aus der Plattenebene hochgebogen ist. Beide Lappen 20 befinden sich auf der dem Werkstück abgewendeten Seite der Tragplatte 6, und sie verlaufen genau parallel zueinander in einem Abstand, der etwas mehr als der Breite der Schiene 13 entspricht. Die Tragplatte 6 läßt sich dadurch mit Spiel auf die Schiene 13 der Führungsplatte 11 aufsetzen, und dieses Spiel wird erfindungsgemäß durch eine zwischen Tragplatte 6 und Führungsplatte 11 wirkende Zustellvorrichtung 21 begrenzt, die in Fig. 1 schematisch dergestellt ist.

Die Zustellvorrichtung 21 ist in einem gegenüber der Führungsplatte 11 verbreiterten Bereich der Tragplatte 6 angeordnet. Im aufgesetzten Zustand- ragt die Tragplatte 6 beidseits über die Führungsplatte 11 hinaus, wobei insbesondere gewährleistet ist, das das Sägeblatt 3 jenseits des der Schiene 13 abgewandten Rands 23 der Führungsplatte 11 zu liegen kommt. Das Sägeblatt 3 erreicht in allen möglichen Schwenkstellungen der Kreissäge 1 das zu bearbeitende Werkstück unbehindert von der Führungsplatte 11. Auf der anderen Seite der Führungsplatte 11 steht die Tragplatte 6 mit einem Abschnitt 24 über, der die Zustellvorrichtung 21 aufnimmt. Diese weist ein Stellglied 22 auf, das quer zu der Längsrichtung der Schiene 13 beweglich gelagert ist. Das Stellglied 22 durchsetzt einen Schlitz oder Spalt in einem der Lappen 20, und es ragt in den Zwischenraum hinein, der im aufgesetzten Zustand von der Schiene 13 eingenommen wird. Das Stellglied 22 beaufschlagt die Schiene 13 mit einer Partie 25, die insbesondere abgerundet sein kann, und es begrenzt so das Querbewegungsspiel der Schiene 13 zwischen den Lappen 20. Wie noch nachstehend näher erläutert, können verschiedene Einstellmöglichkeiten für das Stellglied 22 verwirklicht werden. U.a. ist eine starre Festeinstellung möglich; das Stellglied 22 kann aber auch federelastisch gegen die Schiene 13 gespannt sein. In Fig. 1 ist insofern eine Druckfeder 26 angedeutet, die das Stellglied 22 beaufschlagt.

Die Ausnehmung 19 bzw. die Lappen 20 erstrecken sich praktisch über die gesamte Länge der Tragplatte 6, so daß nur in ihrem Randbereich Stege 27 stehenbleiben. Zur Stabilisierung kann man über die Länge der Ausnehmung 19 verteilt eine Anzahl von Brücken 28 vorsehen, die die Lappen 20 miteinander verbinden. Die Brücken 28 überspannen portalartig die Ausnehmung 19. Sie können ohne weiteres auch die Stege 27 am Rand der Tragplatte 6 ersetzen, so daß die Ausnehmung 19 ohne Endbegrenzung über die volle Länge der Tragplatte 6 durchgeht. Diese Anordnung hat den Vorteil, deß ein Verschieben auf der Führungsplatte 11 möglich ist, ohne daß man auf einen Endanschlag trifft.

Die in Sägerichtung verlaufenden Randabschnitte 29 der Tragplatte 6 sind um ca. 90° aus der Plattenebene nach oben hochgebogen. Sie können ebenfalls zur Führung der Säge dienen.

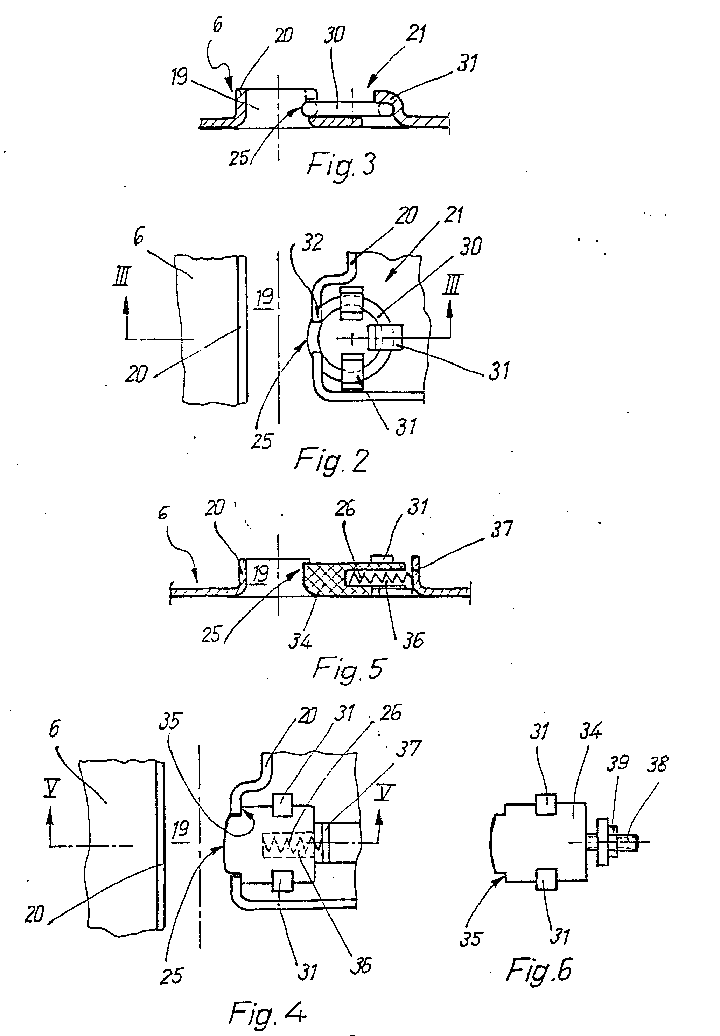

Bezugnehmend nunmehr auf Fig. 2 und Fig. 3, ist ein erstes praktisches Ausführungsbeispiel der Zustellvorrichtung dargestellt, die das Spiel zwischen Tragplatte 6 und Führungsplatte 11 begrenzt. Die Zustellvorrichtung ist an der Tragplatte 6 angeordnet. Man erkennt in der Abbildung je einen Abschnitt der Tragplatte 6 beidseits der Ausnehmung 19, die die Schiene 13 aufnimmt. Die Ausnehmung 19 wird durch Randlappen 20 der Tragplatte 6 begrenzt, die gegenüber der Plattenebene um ca. 90° aufgebogen sind. Der in Fig. 2 und 3 linke Randlappen 20 verläuft im wesentlichen gerade und parallel zu der Vorschubrichtung der Säge. Der gegenüberliegende Randlappen 20 ist dagegen unter Ausbildung einer Verengungsstelle der Ausnehmung 19 abgekröpft bzw. abgebogen, und an dieser Verengungsstelle ist die Zustellvorrichtung 21 montiert.

Die Zustellvorrichtung 21 weist einen Ring 30 auf, der aus federndem Material, und insbesondere aus Federstahl, z.B. aber auch aus Kunststoff besteht. Der Ring 30 ist in flächiger Anlage an der Tragplatte 6 befestigt, wobei die Ringebene parallel zu der Plattenebene zu liegen kommt. Zur Befestigung dienen Laschen 31, die vorzugsweise aus der Tragplatte 6 ausgestanzt oder ausgeprägt und hochgebogen sind, so daß sie den Ring 30 übergreifen. Die Laschen 31 sind über den Umfang des Rings 30 verteilt. Insbesondere können drei um ca. 90° versetzt angeordnete Laschen 31 Verwendung finden.

Der Ring 30 wird unter elastischer Deformation zwischen die Laschen 31 und den Boden der Tragplatte 6 eingesetzt. Er kommt unter Spannung an dem aufgebogenen Randlappen 20 zu liegen, und dieser Randlappen 20 besitzt einen Schlitz oder Spalt 32, durch den der Ring 30 hindurchragt. Der Ring 30 ist derart in dem Spalt 32 aufgenommen, daß er über die der Schiene 13 zugewandten Aussenseite des Lappens 20 hinaussteht und mit der Schiene 13 zur Anlage kommt, wenn die Tragplatte 6 mit der Ausnehmung 19 auf die Schiene 13 aufgesetzt wird. Der Ring 30 stützt sich an den Seitenkanten des Randlappens 20 ab, die den Spalt 32 begrenzen. Die Laschen 31 befinden sich auf der dem Spalt 32 abgewandten Halbseite des Rings 30. Sie ermöglichen eine Deformation des Rings 30, bei der dieser in den Spalt 32 zurückweicht und die Schiene 13 aufgrund seiner inneren Elastizität beaufschlagt. Der Ring 30 besteht vorzugsweise aus einem Rundmaterial. Hierdurch erhält die mit der Schiene 13 zur Anlage kommende, aus dem Spalt 32 heraustretende Partie ein abgerundetes Profil, das ein leichtes Aufsetzen der Tragplatte 6 auf die Führungsplatte 11 ermöglicht.

Vorzugsweise sind an der Tragplatte 6 mehrere, über ihre Länge verteilte Zustellvorrichtungen 21 vorhanden. Insbesondere empfiehlt sich eine Anordnung von zwei Zustellvorrichtungen, so daß zwei im Abstand angeordnete Ringe 30 die Schiene 13 beaufschlagen und eine Zweipunktlagerung auf der Schiene 13 herbeiführen. Die Zustellvorrichtungen 21 kommen vorzugsweise an den beiden Enden der Ausnehmung 19, d.h. im Randbereich der Tragplatte 6 zu liegen, damit ein möglichst großer Abstand der Lagerpunkte gewährleistet ist.

Bezugnehmend nun auf Fig. 4 und 5, ist eine alternative Bauform der Zustellvorrichtung 21 gezeigt. Die Form der Tragplatte 6 ist im wesentlichen unverändert; man erkennt wiederum die die Schiene 13 aufnehmende Ausnehmung 19 und diese begrenzenden Randlappen 20. Einer der Randlappen 20 ist unter Ausbildung einer Verengungsstelle der Ausnehmung 19 abgekröpft bzw. abgewinkelt und an dieser Verengungsstelle geschlitzt. In dem Schlitz sitzt ein Gleitschuh 34 ein, der als Formteil beispielsweise aus Kunststoff gefertigt sein kann. Der Gleitschuh 34 ist quer zu der Längsrichtung der Schiene 13 beweglich gelagert. Er ragt mit einer verjüngten Anlagepartie 25 durch den Schlitz 33 hindurch, die vorzugsweise auf etwa halber Höhe der Schiene 13 gegen eine Seitenwand der Schiene 13 arbeitet. Die Anlagepartie 25 ist vorzugsweise kuppenartig gerundet, und zwar sowohl in Längsrichtung der Schiene 13, als auch in Richtung ihrer Höhe. Die Anlagepartie 25 geht über eine Schulter 35 in einem verbreiterten Abschnitt des Gleitschuhs 34 über. Der Gleitschuh 34 stützt sich mit der Schulter 35 gegen die Randkanten des Schlitzes 33 ab, und diese Anlagestellung begrenzt den Betrag, um den die Anlagepartie 25 über die der Schiene 13 zugewandte Aussenseite des Randlappens 20 hinaussteht.

Der Gleitschuh 34 wird durch Laschen 31 an der Tragplatte 6 gehalten. Die Laschen 31 können durch Stanzen oder Prägen aus der Tragplatte 6 ausgeformt sein. Sie sind einander gegenüberliegend am Seitenrand des Gleitschuhs 34 vorgesehen, und sie übergreifen diesen klauenartig, wobei aber das nötige Bewegungsspiel für ein Verschieben des Gleitschuhs 34 quer zu der Schienenlängsrichtung gewährleistet ist. Der Gleitschuh 34 steht unter der Kraft einer Druckfeder 26, die ihn gegen die Schiene 13 spannt. Als Druckfeder 26 kann beispielsweise eine Spiraldruckfeder aber auch eine Blattfeder Verwendung finden. Konstruktiv besonders einfach ist eine Anordnung, bei der eine Spiraldruckfeder 26 in einem Sackloch 36 des Gleitschuhs 34 aufgenommen ist. Die Spiraldruckfeder 26 stützt sich mit ihrem einen Ende gegen den Boden dieses Sacklochs 36 ab, und ihr anderes Ende findet an der Tragplatte 6 ein geeignetes Widerlager. Insbesondere kann hierzu an der Tragplatte 6 eine weitere Lasche 37 ausgeprägt sein, die dem Schlitz 33 gegenüberliegt und dicht an der Rückseite das Gleitschuhs 34 angeordnet ist. Diese Lasche 37 kann zugleich den Stellhub des Gleitschuhs 34 von der Schiene 13 weg begrenzen.

Bei allen bisher beschriebenen Ausführungsbeispielen liegt das Stellglied 22 der Zustellvorrichtung 21 federnd oder federbelastet an der Schiene 13 an. Diese Anordnung hat den Vorteil, selbst nachstellend zu sein, wodurch Fertigungstoleranzen und ein evtl. Verschleiß automatisch ausgeglichen werden. Man kann die Federkraft durch eine entsprechende, feste Materialvorgabe in weiten Grenzen variieren, und überdies die Federkraft verstellbar gestalten. Hierdurch läßt sich das Spiel zwischen Tragplatte 6 und Führungsplatte 11 minimieren und zugleich die in der Schienenführung zu überwindende Reibungskraft gering halten. Statt einer federnden Anlage des Stellglieds 22 kann aber auch eine starre Einstellbarkeit seiner Position vorgesehen sein. Bezugnehmend auf Fig. 6, erkennt man insofern einen Gleitschuh 34, der in Aufbau und Anordnung im wesentlichen dem Gleitschuh gemäß Fig. 4 entspricht. Er ist in Laschen 31 quer zu der Schienenlängsrichtung verstellbar gelagert, und er beaufschlagt die Schiene 13 mit einer Anlagepartie 25, die durch einen Schlitz oder Spalt 33 aus dem die Ausnehmung 19 begrenzenden Randlappen 20 austritt. Das Verstellen des Gleitschuhs 34 erfolgt mittels eines Schrauben- oder Spindeltriebs. Men erkennt im einzelnen eine Wurmschraube 38, die in eine Gewindebohrung des Gleitschuhs 34 eingreift. Die Wurmschraube 38 ist drehbar und in Längsrichtung unverschiebbar an der Tragplatte 6 gelagert, während durch die Laschen 31 eine verdrehsichere, längsbewegliche Führung des Gleitschuhs 34 hergestellt wird. Durch ein Drehen der Wurmschraube 38 wird somit der Gleitschuh 34 in Richtung hin auf die Schiene 13 bzw. davon weg verstellt. Die Einstellung des Gleitschuhs 34 wird entsprechend dem gewünschten Spiel zwischen Tragplatte 6 und Führungsplatte 11 vorgenommen und durch Anziehen einer auf der Wurmschraube 38 laufenden Kontermutter 39 fixiert.

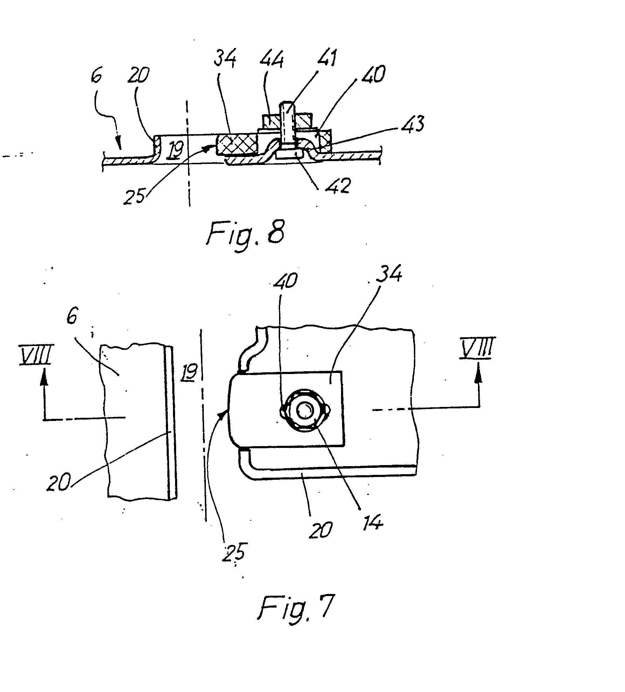

Bezugnehmend auf Fig. 7 und 8, ist ein weiteres Beispiel für die Festeinstellung eines Gleitschuhs 34 dargestellt. Der Gleitschuh 34 ist in diesem Fall ein flaches Formteil aus Kunststoff mit im wesentlichen rechteckigem Grundriß. Der Gleitschuh 34 ragt mit einer gewölbten Anlagepartie 25 durch einen Schlitz oder Spalt 33 in den Laufbereich der Schiene 13, und er ist in einer Langlochführung quer zu der Schienenlängsrichtung verstellbar. Wie man insbesondere in Fig. 8 erkennt, ist in dem Gleitschuh 34 ein Langloch 40 ausgenommen. Die Tragplatte 6 haltert eine Schraube 41, die im montierten Zustand durch das Langloch 40 hindurchgreift. Die Schraube 41 ist dabei mit ihrem Kopf 42 in eine Einprägung 43 der Tragplatte 6 aufgenommen, so da sie unter die Oberfläche der Tragplatte 6 versendt liegt. Die Einprägung 43 kann dabei so an die Kontur des Schraubenkopfes 42 angepasst sein, daß dieser gegen Verdrehung gesichert in der Einprägung 43 zu liegen kommt. Die Einprägung 43 greift weiterhin in das Langloch 40 des Gleitschuhs 34 ein, womit das Verschiebespiel des Gleitschuhs 34 begrenzt wird. Eine Schulter 35 an dem Gleitschuh 34, wie sie gemäß Fig. 4 und Fig. 6 als Anschlagbegrenzung Verwendung findet, kann gemäß Fig. 7 entfallen, da die Einprägung 43 diese Funktion übernimmt. Die Schraube 41 ragt mit ihrem Schaft durch das Langloch 40 hindurch, und sie steht über die Oberfläche des Gleitschuhs 34 hinaus. Auf dieses Ende der Schraube 41 ist eine Mutter 44 aufgeschraubt, die sich vorzugsweise über eine Unterlegscheibe gegen den Gleitschuh 34 abstützt und diesen in vorwählbaren Einstellungen arretiert.

Wie wohl keiner näheren Erläuterungen bedarf, können jeweils mehrere, und vorzugsweise zwei Einheiten der beschriebenen Zustellvorrichtung 21 über die Länge der Ausnehmung 19 verteilt sein, die die Schiene 13 führt. Weiterhin arbeiten die jeweiligen Stellglieder 22 durchweg auf etwa halber Höhe gegen eine Seitenwand der Schiene 13. Bei den dargestellten Ausführungsbeispielen ist die Zustellvorrichtung 21 durchweg an der Tragplatte 6 angeordnet. Es ist aber auch eine Bauweise denkbar, bei der sich eine oder mehrere Einheiten der Zustellvorrichtung 21 im Bereich der Schiene 13 an der Führungsplatte 11 befinden und Stellglieder enthalten, die gegen einen geeigneten Führungsabschnitt der Tragplatte 6 arbeiten. Verschiedene Bauformen der Zustellvorrichtung 21 können miteinander kombiniert werden, und insbesondere kann teils eine Festeinstellung und teils eine federbelastete Anlagestellung des Stellglieds 22 an der Schiene 13 vorgesehen sein. Die Zustellvorrichtung kann an einer oder mehreren Stellen punktuell zwischen Tragplatte 6 und Führungsplstte 11 wirken; sie kann aber auch ein sich über einen Teil oder die volle Länge von Führungsplatte oder Tragplatte erstreckendes Stellglied enthelten. Bei einem Aufbau des Stellglieds sus Kunststoff kann vorzugsweise auch die dem Stellglied gegenüberliegende Gleitfläche der Führungseinrichtung aus Kunststoff bestehen. Hierdurch wird eine Reibung von Metall an Metall vermieden und ein besonders gutes Gleitverhalten erzielt.

**Patentansprüche**

1. Führungseinrichtung für eine transportable Säge (1), bestehend aus einer auf ein Werkstück auflegbaren Führungsplatte (11), die eine sich in Vorschubrichtung der Säge erstreckende; erhabene Schiene (13) trägt, und einer an der Säge befestigten Tragplatte (6), die auf die Führungsplatte aufsetzbar und an der Schiene entlang verschiebbar ist, wobei sie mit beidseits der Schiene zu liegen kommenden Führungsabschnitten (20) gegen die Schiene abgestützt ist, gekennzeichnet durch eine zwischen Tragplatte (6) und Führungsplatte (11) wirkende Zustellvorrichtung (21), die das Laufspiel zwischen der Schiene (13) und den Führungsabschnitten (20) bestimmt.

2. Führungseinrichtung nech Anspruch 1, dadurch gekennzeichnet, daß die Zustellvorrichtung (21) an der Tragplatte (6) angeordnet ist und ein Stellglied (22) enthält, das gegen eine Seitenwand der Schiene (13) arbeitet.

3. Führungseinrichtung nach Anspruch 1, dadurch gekennzeichnet, daß die Zustellvorrichtung (21) im Bereich der Schiene (13) an der Führungsplatte (11) angeordnet ist und ein Stellglied (22) enthält, das gegen einen Führungsabschnitt der Tragplatte (6) arbeitet.

4. Führungseinrichtung nach einem der Ansprüche 1 bis 3, dadurch gekennzeichnet, daß des Stellglied (22) quer zu der Schienenlängsrichtung verstellbar ist.

5. Führungseinrichtung nach einem der Ansprüche 1 bis 4, dadurch gekennzeichnet, daß das Stellglied (22) federnd oder federbelastet ist.

6. Führungseinrichtung nach einem der Ansprüche 1 bis 5, dadurch gekennzeichnet, daß das Stellglied (22) eine abgerundete Anlagepartie (25) besitzt.

7. Führungseinrichtung nach einem der Ansprüche 2 und 4 bis 6, dadurch gekennzeichnet, daß das Stellglied (22) durch einen Spalt (32) oder Schlitz (33) in der Tragplatte (6) hindurchgreift und über eine der Schiene (13) zugewandte Oberfläche der Tragplatte (6) hinaussteht.

8. Führungseinrichtung nach Anspruch 7, dadurch gekennzeichnet, daß das Stellglied ein Federring (30) ist.

9. Führungseinrichtung nach Anspruch 7, dadurch gekennzeichnet, daß das Stellglied ein Gleitschuh (34) ist, der mittels einer Feder, z.B. einer Spiraldruckfeder (26) oder Blattfeder gegen die Schiene (13) gespannt ist.

10. Führungseinrichtung nach Anspruch 9, dadurch gekennzeichnet, daß der Stellbereich des Gleitschuhs (34) durch eine Schulter (35) begrenzt wird, mit der er sich beidseits gegen eine Randkante des Spaltes (32) oder Schlitzes (33) legt.

11. Führungseinrichtung nach Anspruch 7, dadurch gekennzeichnet, daß das Stellglied ein Gleitschuh (34) ist, der sich mittels eines Schrauben- oder Spindeltriebs bzw. in einer Langlochführung verstellen und arretieren läßt.

### Claims

1. Guiding device for a transportable saw (1), consisting of a guide plate (11) which can be placed on a workpiece, extends in the feed direction of the saw, carries a raised rail (13), and a carrying-plate (6) which can be mounted on the guide plate and can be shifted along the rail, being supported against the rail by guide lengths (20) at both sides of the rail, characterised by an adjusting device (21) acting between carrying plate (6) and guide plate (11) which determines the running clearance between the rail (13) and the guide lengths (20).

2. Guiding device in accordance with Claim 1, characterised by the fact that the adjusting device (21) is arranged on the carrying plate (6) and contains an adjusting element (22) which acts against a side wall of the rail (13).

3. Guiding device in accordance with Claim 1, characterised by the fact that the adjusting device (21) in the area of the rail (13) is arranged on the guide plate (11) and contains an adjusting element (22) which acts against a guide length of the carrying plate (6).

4. Guiding device in accordance with one of the Claims 1 to 3, characterised by the fact that the adjusting element (22) is adjustable at right angles to the longitudinal direction of the rail.

5. Guiding device in accordance with one of the Claims 1 to 4, characterised by the fact that the adjusting element (22) is sprung or spring-loaded.

6. Guiding device in accordance with one of the Claims 1 to 5, characterised by the fact that the adjusting element (22) has a rounded contact area (25).

7. Guiding device in accordance with one of the Claims 2 and 4 to 6, characterised by the fact that the adjusting element (22) engages through a gap (32) or slot (33) in the carrying plate (6) and protrudes beyond a surface of the carrying plate (6) facing the rail (13).

8. Guiding device in accordance with Claim 7, characterised by the fact that the adjusting element is a spring washer (30).

9. Guiding device in accordance with Claim 7, characterised by the fact that the adjusting element is a sliding shoe (34) which is tensioned against the rail (13) by means of a spring, e.g. a helical compression spring (26) or leaf spring.

10. Guiding device in accordance with Claim 9, characterised by the fact that the range of adjustment of the sliding shoe (34) is limited by a shoulder (35) with which it contacts at both sides against the edges of the gap (32) or slot (33).

11. Guiding device in accordance with Claim 7, characterised by the fact that the adjusting device is a sliding shoe (34) which can be adjusted and locked by means of a screw or spindle gear and/or in an elongated hole guide.

### Revendications

1. Dispositif de guidage pour une scie portative, constitué d'une plaque de guidage (11) applicable sur une pièce travaillée et qui porte une glissière profilée (13) s'étendant dans le sens d'avance de la scie, et d'une plaque de support (6) qui peut être mise en place sur la plaque de guidage et qui peut être déplacée le long de la glissière, en étant appuyée contre la glissière par des parties de guidage (20) venant en contact de chaque côté de la glissière, caractérisé par un dispositif de réglage (21) agissant entre la plaque de support (6) et la plaque de guidage (11), qui détermine le jeu de fonctionnement entre la glissière (13) et les parties de guidage (20).

2. Dispositif de guidage selon la revendication 1, caractérisé en ce que le dispositif de réglage (21) est disposé sur la plaque de support (6) et comporte un organe de réglage (22) qui agit sur une paroi latérale de la glissière (13).

3. Dispositif de guidage selon la revendication 1, caractérisé en ce que le dispositif de réglage (21) est disposé sur la plaque de guidage (11) au niveau de la glissière (13), et comporte un organe de réglage (22) qui agit sur une partie de guidage de la plaque de support (6).

4. Dispositif de guidage selon une des revendications 1 à 3, caractérisé en ce que l'organe de réglage (22) peut être déplacé perpendiculairement au sens longitudinal de la glissière.

5. Dispositif de guidage selon une des revendications 1 à 4, caractérisé en ce que l'organe de réglage (22) est elastique ou chargé par ressort.

6. Dispositif de guidage selon une des revendications 1 à 5, caractérisé en ce que l'organe de réglage (22) présente une partie d'appuie arrondie (25).

7. Dispositif de guidage selon une des revendications 2 et 4 à 6, caractérisé en ce que l'organe de réglage (22) traverse une fente (32) ou une rainure (33) pratiquée dans la plaque de support (6), et dépasse d'une surface de la plaque de support (6) tournée vers la glissière (13).

8. Dispositif de guidage selon la revendication 7, caractérisé en ce que l'organe de réglage est une rondelle élastique (30).

9. Dispositif de guidage selon la revendication 7, caractérisé en ce que l'organe de réglage est un patin de guidage (34) qui est serré contre la glissière (13) au moyen d'un ressort, ressort spiral (26) ou ressort à lames par exemple.

10. Dispositif de guidage selon la revendication 9, caractérisé en ce que la plage de réglage du patin de guidage (34) est limitée par un épaulement (35) par lequel le patin s'appuie des deux côtés contre un bord de la fente (32) ou de la rainure (33).

11. Dispositif de guidage selon la revendication 7, caractérisé en ce que l'organe de réglage est un patin de guidage (34) qui peut être déplacé et bloqué au moyen d'un mécanisme à vis ou à broche ou encore dans un guide à trou oblong.

Fig.1

Fig. 3

Fig. 2

Fig. 5

Fig. 4

Fig. 6

Fig. 8

Fig. 7